# EUROPEAN PATENT APPLICATION

(11) **EP 4 757 061 A1**
(43) Date of publication of application: **10.06.2026**
(21) Application number: 24877482.0
(22) Date of filing: 07.10.2024
(51) Int. Cl.: H01M 50/59, H01M 50/591, H01M 50/588, H01M 50/502, H01M 50/521, H01M 50/524

(54) **SECONDARY BATTERY MODULE**

(30) Priority: 12.10.2023 KR 20230136188
(71) Applicant: LG Energy Solution, Ltd., Seoul 07335 (KR)
(72) Inventor: KIM, Gun Ryang, Daejeon 34122 (KR); CHO, Young Il, Daejeon 34122 (KR); PARK, Sang Jun, Daejeon 34122 (KR); YUN, Seong Guk, Daejeon 34122 (KR)
(74) Representative: BCKIP Part mbB
(86) International application number: PCT/KR2024/015235
(87) International publication number: WO 2025/079945

(57) **Abstract**

A secondary battery module according to the present disclosure includes a battery cell stack having a plurality of battery cells stacked and accommodated in a housing frame; a busbar frame including a coupling surface coupled to the housing frame to cover the battery cell stack and a protrusion protruding from the coupling surface outward away from the battery cell stack and having a terminal provided on an upper surface; and an insulation cover including a side cover portion coupled to cover an outer side of the protrusion and an upper cover portion disposed further inward than the side cover portion to expose the terminal at a higher position than the protrusion, wherein the busbar frame has a shielding portion protruding from the coupling surface in the upward and downward directions to shield the space between the terminal and the battery cell stack. The present disclosure having the above configuration may prevent contact between dust and the terminal even if a fire occurs in the battery cell stack and the dust is generated because the space between the battery cell stack and the terminal is closed by the shielding portion and the upper cover portion. Accordingly, it is possible to prevent progression to thermal runway or to delay the ongoing thermal runway.

## Description

### TECHNICAL FIELD

The present application claims priority to Korean Patent Application No. 10-2023-0136188 filed on October 12, 2023 in the Republic of Korea, the disclosures of which are incorporated herein by reference.

The present disclosure relates to a secondary battery module, and more specifically, to a secondary battery module capable of solving the problem of progression to thermal runway due to dust even if the dust is generated by a fire occurring in a battery cell.

### BACKGROUND ART

Demand for high-efficiency secondary batteries is rapidly increasing in the fields of portable devices and electric vehicles. Among such secondary batteries, lithium secondary batteries that have high energy density, maintain relatively high voltage, and have low self-discharge rate are commercialized and widely used, and research and development to improve performance thereof are being actively conducted.

Secondary batteries have a structure in which an electrode assembly and an electrolyte solution are embedded in a case such as a can or a pouch.

Among these, a pouch-type secondary battery has a structure in which an electrode assembly is mounted in the pouch. In this case, the electrode assembly has a structure in which a positive electrode, a separator, and a negative electrode are repeatedly stacked, wherein positive electrode tabs extending from each positive electrode are collected together and bonded to positive electrode leads (electrode leads with a positive electrode), and negative electrode tabs extending from each negative electrode are collected together and bonded to negative electrode leads (electrode leads with a negative electrode). And, the ends of the positive electrode leads and the negative electrode leads protrude from the pouch so as to be electrically connected to the outside.

Meanwhile, a plurality of secondary batteries mounted on a vehicle, an energy storage system (ESS), or the like are combined to form a secondary battery module to increase output and electricity storage capacity, and a plurality of secondary battery modules are combined to form a secondary battery pack. That is, a plurality of secondary batteries are collected together to be manufactured as a secondary battery module, and a plurality of secondary battery modules are collected together to be installed in a vehicle, an ESS, or the like in a state of being manufactured as a secondary battery pack.

When the pouch-type secondary battery is manufactured as a secondary battery module, the secondary batteries (battery cells) are stacked so that their flat surfaces are in contact with each other, and are provided as a battery cell stack 10 in a state where the secondary batteries are bound together by tape, cable, or the like, or by applying an adhesive to the surfaces in contact.

For reference, a compression pad may be further provided between neighboring battery cells 11 to absorb contraction and expansion of the battery cells in the battery cell stack 10 and reduce heat generation.

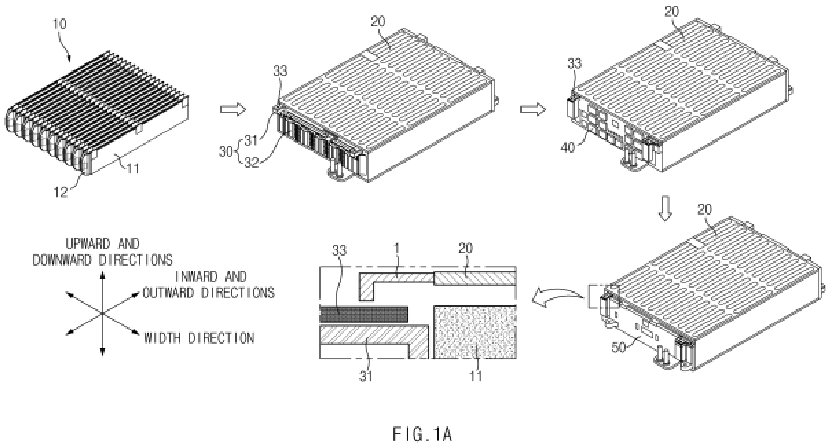

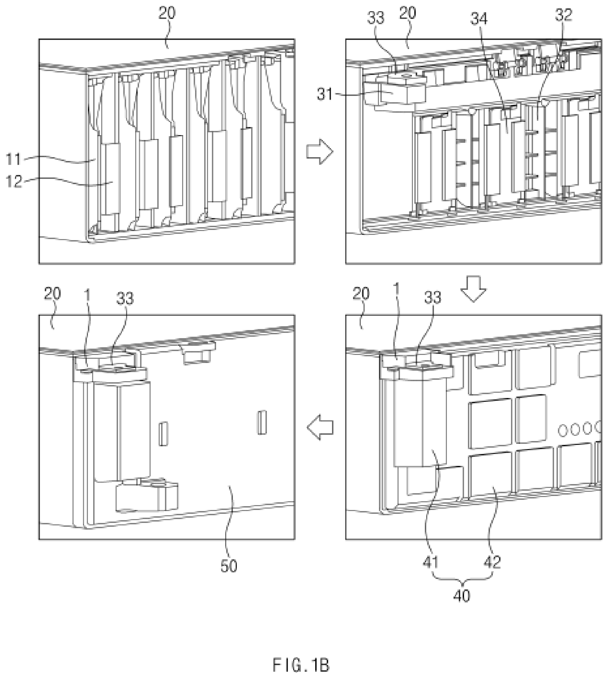

Referring to FIG. 1a, which sequentially shows a battery cell stack 10, a state in which the battery cell stack 10 is accommodated in a housing frame 20 and coupled to a busbar frame 30 in the inward and outward directions, a state in which an insulation cover 40 is coupled outside the busbar frame 30, and a state in which an end plate 50 is coupled to the outer side of the insulation cover 40, and referring to FIG. 1b which sequentially shows states in which the busbar frame 30, the insulation cover 40, and the end plate 50 are coupled to a housing frame 20 while the battery cell stack 10 is mounted on the housing frame 20, a predetermined number of battery cells 11 are stacked so that the electrode leads 12 protrude in the same direction (to both sides or to one side) and are provided as the battery cell stack 10.

And, the housing frame 20 is coupled to cover the upper surface, lower surface, and side surfaces formed along the width direction, except for the side surfaces in the inward and outward directions (surfaces formed in the inward and outward directions) from which the electrode leads 12 protrude in the battery cell stack 10. And, on the side surface from which the electrode leads 12 protrude, a busbar frame 30 mounted with a busbar 34 is mounted to cover the exposed side surface of the battery cell stack 10.

At this time, a slit is perforated in the busbar frame 30, so that the electrode leads 12 are connected to the busbar 34 of the busbar frame 30 by welding or the like after passing through the slit. And, each busbar 34 is electrically connected to a terminal 33. Therefore, the busbar frame 30 includes a coupling surface 32 covering the battery cell stack 10 and having a perforated slit, and includes a protrusion 31 protruding outward from the coupling surface 32 so as to be exposed to the outside even when the end plate 50 is coupled. And, the terminal 33 is manufactured to be placed on the upper surface of the protrusion 31.

Next, an insulation cover 40 is coupled to cover the coupling surface 32 and the protrusion 31 of the busbar frame 30 from the outside, and an end plate 50 is sequentially coupled to cover the outer side of the insulation cover 40.

On the other hand, as the busbar frame 30 is formed with the protrusion 31 in an outward direction, the upper end portion 1 placed on the protrusion 31 in the insulation cover 40 is manufactured in a simple shape to eliminate interference when the insulation cover 40 is mounted.

That is, as shown in FIG. 1a, the upper end portion 1 of the insulation cover 40 is manufactured to have an 'L'-shaped cross-section to ensure minimum rigidity. Accordingly, as shown in FIG. 1a, in the conventional structure, the battery cell stack 10 and the terminal 33 are manufactured to have an open structure therebetween.

However, in this structure, if a fire occurs in any one of the battery cells 11, dust generated during the fire may contact the terminal 33 to cause an electrical short, thereby progressing to thermal runway or further accelerating the ongoing thermal runway. The dust mentioned herein refers to small ash that is scattered by the reaction and/or explosion of compounds within the battery cell 11 when a fire occurs in the battery cell.

More specifically, in a situation where a thermal runway occurs in a secondary battery module, it is important to prevent the occurrence of an electrical short between the respective busbars. And, since each busbar is connected to the terminal 33, and (when a plurality of secondary battery modules are electrically connected to each other) the terminals 33 of neighboring secondary battery modules are also electrically connected to each other, it was important to prevent the occurrence of a short circuit at the terminal 30 in order to prevent or delay thermal runaway.

In particular, as the capacity and output of secondary battery modules mounted on a means of transportation such as a vehicle increase, the stability risk also increases. Even if a fire broke out in the secondary battery module, there was a need to delay thermal runaway as much as possible in order to ensure the evacuation time of the passengers.

### SUMMARY

### TECHNICAL PROBLEM

Therefore, the present disclosure is directed to providing a secondary battery module capable of preventing dust generated in the battery cell from causing a short circuit at the terminal by isolating the battery cell stack and the terminal from each other in order to suppress or maximally delay the progression to thermal runaway even if ignition occurs in the battery cell.

### TECHNICAL SOLUTION

A secondary battery module provided in the present disclosure for achieving the above-described purpose includes a battery cell stack 10 having a plurality of battery cells 11 stacked and accommodated in a housing frame 20; a busbar frame 30 including a coupling surface 32 coupled to the housing frame 20 to cover the battery cell stack 10 and a protrusion 31 protruding from the coupling surface 32 outward away from the battery cell stack 10 and having a terminal 33 provided on an upper surface; and an insulation cover 40 including a side cover portion 41 coupled to cover an outer side of the protrusion 31 and an upper cover portion 45 disposed further inward than the side cover portion 41 to expose the terminal 33 at a higher position than the protrusion 31, wherein the busbar frame 30 has a shielding portion A1 protruding from the coupling surface 32 in an upward and downward directions to shield a space between the terminal 33 and the battery cell stack 10.

The upper cover portion 45 includes a horizontal portion 43 forming a surface parallel to an upper surface of the protrusion 31; and a vertical portion 44 protruding vertically from an upper surface of the horizontal portion 43.

The shielding portion A1 is disposed to be perpendicular to the horizontal portion 43.

The vertical portion 44 is disposed to face an end of the housing frame 20.

A busbar 34 to which electrode leads 12 protruding from each battery cell 11 are electrically connected is coupled to the coupling surface 32, and the protrusion 31 is disposed at a higher position than the busbar 34 along the upward and downward directions.

The shielding portion A1 is manufactured separately from the busbar frame 30, and is made of a material having higher heat resistance than that of the busbar frame 30 and is coupled to the busbar frame 30.

For example, the busbar frame 30 is made of a metal material or a synthetic resin material, and the shielding portion A1 is made of glass fiber.

In addition, the secondary battery module provided in the present disclosure further includes second shielding portions A2 that divide and close the space between the insulation cover 40 and the busbar frame 30 at a position spaced apart from the protrusion 31 along a width direction.

Two of the second shielding portions A2 are formed to be spaced apart from each other with the protrusion 31 interposed therebetween.

And, the second shielding portion A2 includes a first projection 46 protruding from the insulation cover 40 and a second projection 35 protruding from the busbar frame 30, and the ends of the first projection 46 and the second projection 35 are disposed to face each other to form the second shielding portion A2.

### ADVANTAGEOUS EFFECTS

The present disclosure having the above configuration may prevent contact between dust and the terminal even if a fire occurs in the battery cell stack and the dust is generated because the space between the battery cell stack and the terminal is closed by the shielding portion and the upper cover portion. Accordingly, it is possible to prevent progression to thermal runway or to delay the ongoing thermal runway.

In the upper cover portion, a horizontal portion may be formed to facilitate coupling with the housing frame, and the coupling position may be guided by a vertical portion.

The shielding portion may be made of glass fiber separately from the busbar frame to prevent damage caused by high-temperature dust.

In addition, the present disclosure further provides a second shielding portion that divides the space between the busbar frame and the insulation cover, so that the possibility of contact between dust and the terminal may be further reduced.

### BRIEF DESCRIPTION OF THE DRAWINGS

FIG. 1a is a view sequentially showing a battery cell stack, a state in which the battery cell stack is accommodated in a housing frame and coupled to a busbar frame in the inward and outward directions, a state in which an insulation cover is coupled outside the busbar frame, and a state in which an end plate is coupled to the outer side of the insulation cover.
FIG. 1b is a view sequentially showing states in which a busbar frame, an insulation cover, and an end plate are coupled to a housing frame while a battery cell stack is mounted on the housing frame.
FIG. 2 is a longitudinal cross-sectional view showing an area where a protrusion is positioned in a secondary battery module provided in an embodiment of the present disclosure.
FIG. 3 is a longitudinal cross-sectional view showing an area where a shielding portion is positioned in a secondary battery module provided in an embodiment of the present disclosure.
FIG. 4 is an enlarged view of the longitudinal cross-sectional view shown in FIG. 3.
FIG. 5 is a cross-sectional view showing an area where a shielding portion is positioned and its surroundings in a secondary battery module provided in an embodiment of the present disclosure.
FIG. 6 is a view showing a state in which movement to a terminal is blocked by a shielding portion (left view) and a state in which movement to a terminal is blocked by a second shielding portion (right view), respectively, when dust is generated.

### DETAILED DESCRIPTION

Hereinafter, the present disclosure will be described in detail with reference to the accompanying drawings to enable those having ordinary skill in the technical field pertaining to the present disclosure to easily carry out the present disclosure. However, the present disclosure may be embodied in many different forms and is not limited by the embodiments described herein.

To clearly describe the present disclosure, parts irrelevant to the description are omitted, and the identical reference numerals are affixed to the identical or similar elements throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The present disclosure relates to a secondary battery module capable of preventing dust generated in the battery cell 11 from causing a short circuit at the terminal 33, and hereinafter, embodiments of the present disclosure will be described in more detail with reference to the accompanying drawings.

### Embodiment 1

The secondary battery module provided in this embodiment includes a battery cell stack 10, a busbar frame 30, and an insulation cover 40, and a shielding portion A1 is provided on the busbar frame 30 to isolate the terminal 33 and the battery cell stack 10.

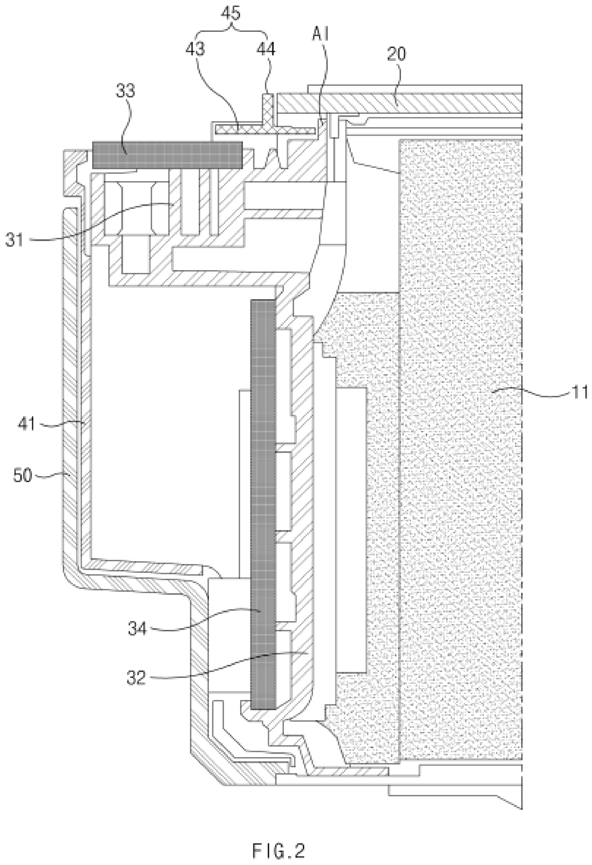

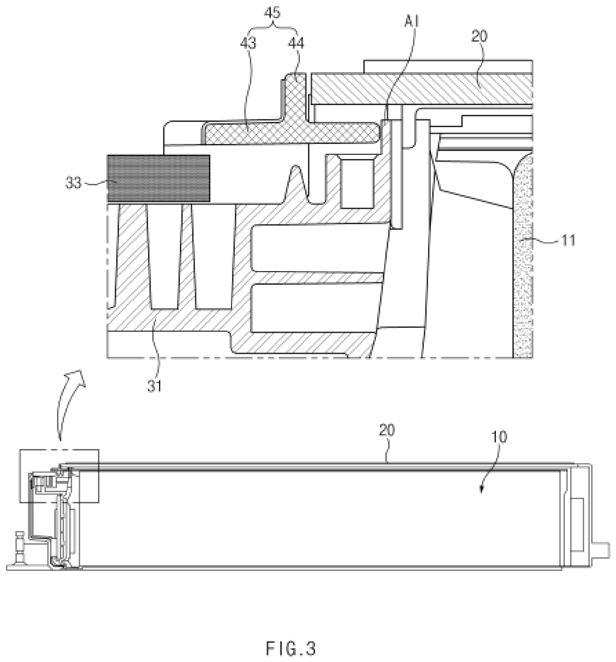

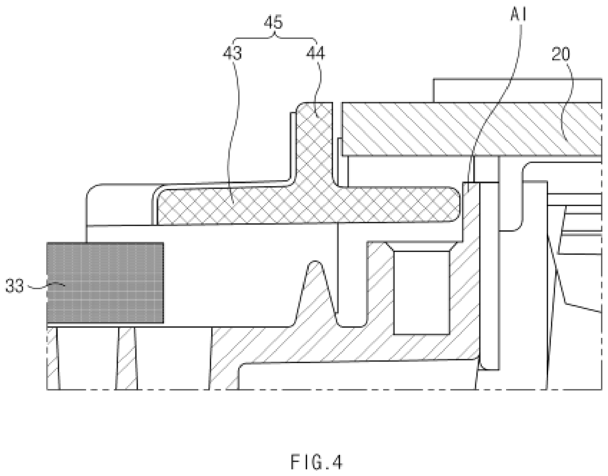

FIG. 2 is a longitudinal cross-sectional view showing an area where a protrusion 31 is positioned in a secondary battery module provided in an embodiment of the present disclosure. And, FIG. 3 is a longitudinal cross-sectional view showing an area where a shielding portion is positioned in a secondary battery module provided in an embodiment of the present disclosure, and FIG. 4 is an enlarged view of the longitudinal cross-sectional view shown in FIG. 3.

The battery cell stack 10 is provided to have a plurality of battery cells 11 stacked and to be accommodated in a housing frame 20, as described above with reference to FIG. 1a.

And, referring to FIGS. 2 to 4, the busbar frame 30 is provided to include a coupling surface 32 coupled to the housing frame 20 to cover the battery cell stack 10 and a protrusion 31 protruding from the coupling surface 32 outward (to left side based on FIG. 2) away from the battery cell stack 10 and having a terminal 33 provided on an upper surface. Therefore, the coupling surface 32 is positioned between the protrusion 31 and the battery cell stack 10.

A busbar 34 to which an electrode lead 12 protruding from the battery cell 11 is electrically connected is coupled to the coupling surface 32. That is, a slit through which the electrode lead 12 passes is perforated in the coupling surface 32, and the electrode lead 12 protrudes outward through the slit and is welded to the busbar 34.

And, the protrusion 31 is disposed at a higher position than the busbar 34 along the upward and downward directions, and each busbar 34 is electrically connected to the terminal 33.

The insulation cover 40 includes a side cover portion 41 coupled to cover an outer side of the protrusion 31 and an upper cover portion 45 disposed to expose the terminal 33 at a higher position than the protrusion 31. That is, the upper cover portion is disposed further inward (right side to be closer to the battery cell stack based on FIG. 2) than the side cover portion 41 to expose the terminal 33.

And, an end plate 50 is coupled to the outside of the insulation cover 40 to cover the insulation cover 40.

Meanwhile, the busbar frame 30 provided in this embodiment has a shielding portion A1 protruding from the coupling surface 32 in the upward and downward directions to shield the space between the terminal 33 and the battery cell stack 10. At this time, the shielding portion A1 may protrude to such an extent that an end thereof is close to, but not in direct contact with, the inner wall surface of the housing frame 20 in order to prevent interference when the busbar frame 30 is assembled with the housing frame 20.

And, the upper cover portion 45 of the insulation cover 40 provided in this embodiment is configured to include a horizontal portion 43 forming a surface parallel to the upper surface of the protrusion 31 and a vertical portion 44 protruding vertically from the upper surface of the horizontal portion 43. At this time, the vertical portion 44 is disposed to face an end of the housing frame 20, and the inner end of the horizontal portion 43 closes the space together with the shielding portion A1 (to prevent external movement of dust).

That is, the shielding portion A1 is disposed to be perpendicular to the horizontal portion 43, and the ends of the horizontal portion 43 are disposed to be in contact with each other or to have a slight gap (enough to ensure sufficient shielding of dust).

Meanwhile, the shielding portion A1 may be provided to be of the same material as the busbar frame 30 and to be integrally formed with the busbar frame 30, but may be provided in such a way that it is manufactured separately and then further coupled to the busbar frame 30.

For example, when a fire occurs, the dust may have a temperature of at least 300 °C. Therefore, the shielding portion A1 provided in this embodiment may be provided in such a way of being manufactured separately from the busbar frame 30, made of a material having higher heat resistance than the busbar frame 30, and then further assembled to the busbar frame 30.

For example, the busbar frame 30 may be made of a metal material or a synthetic resin material. And, the shielding portion A1 is made of glass fiber. Alternatively, the shielding portion A1 may be configured such that, after being manufactured integrally with the busbar frame 30, only the area corresponding to the shielding portion A1 is coated (or laminated) with glass fiber on the surface. At this time, the shielding portion A1 and the material coated on the shielding portion A1 are not limited as long as the material has heat resistance similar to or higher than that of glass fiber and electrical insulation.

In addition, the secondary battery module is provided with a positive electrode terminal that is connected to the positive electrode leads and becomes a positive electrode terminal through the busbar, and a negative electrode terminal that is connected to the negative electrode leads and becomes a negative electrode terminal through the busbar, respectively.

The upper cover portion 45 and the shielding portion A1 provided in this embodiment may be provided at both the busbar frame 30 and the insulation cover 40 to prevent dust from contacting both the positive electrode terminal and the negative electrode terminal.

### Embodiment 2

In addition, the present disclosure provides, as Embodiment 2, a secondary battery module in which a second shielding portion A2 is further provided to prevent not only dust moving in the inward and outward directions but also dust moving in the width direction from flowing into the terminal 33.

The secondary battery module provided in this embodiment includes a battery cell stack 10, a busbar frame 30, and an insulation cover 40, and includes the shielding portion A1 provided in Embodiment 1, and is further provided with a second shielding portion A2.

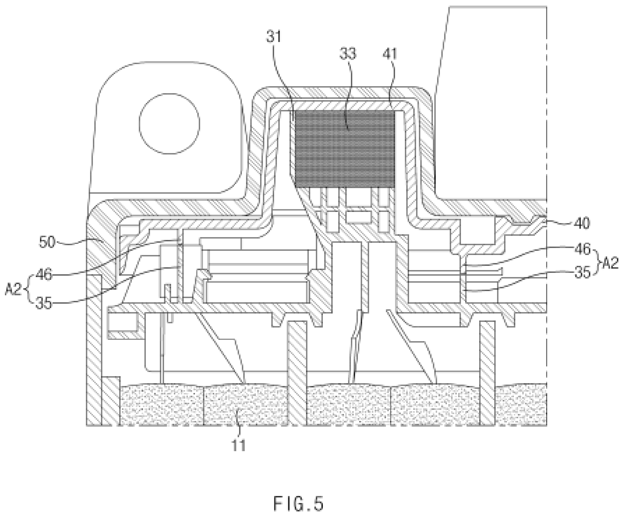

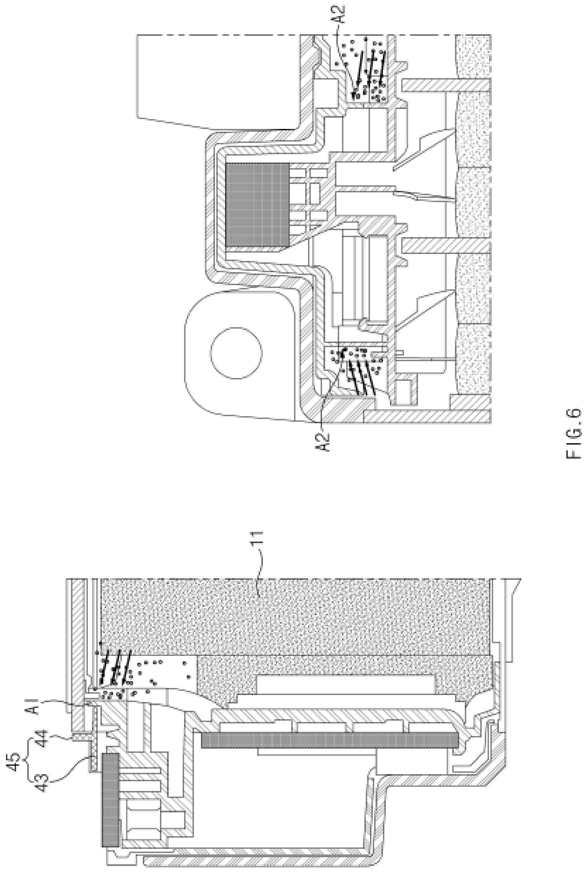

FIG. 5 is a cross-sectional view showing an area where a shielding portion is positioned and its surroundings in a secondary battery module provided in an embodiment of the present disclosure. More specifically, it is a cross-sectional view showing a state in which an area indicated by a rectangle in FIG. 3 is cut in a transverse direction and viewed from above. And, FIG. 6 is a view showing a state in which movement to a terminal 33 is blocked by a shielding portion A1 (left view) and a state in which movement to a terminal 33 is blocked by a second shielding portion A2 (right view), respectively, when dust is generated.

Referring to FIG. 5, in this embodiment, the secondary battery module further includes second shielding portions A2 that divide and close the space between the insulation cover 40 and the busbar frame 30 at a position spaced apart from the protrusion 31 along the width direction.

Two of the second shielding portions A2 are formed to be spaced apart from each other with the protrusion 31 interposed therebetween.

And, the second shielding portion A2 includes a first projection 46 protruding from the insulation cover 40 and a second projection 35 protruding from the busbar frame 30, and the ends of the first projection 46 and the second projection 35 are disposed to face each other to form the second shielding portion A2.

In addition, like the shielding portion A1, the second shielding portion A2 is also made of a material having higher heat resistance than that of the busbar frame 30 and the insulation cover 40.

That is, the first projection 46 and the second projection 35 constituting the second shielding portion A2 may be provided in such a way that they are made of glass fiber and then coupled to each of the busbar frame 30 and the insulation cover 40.

Alternatively, the second shielding portion A2 may be configured such that the first protrusion 46 and the second protrusion 35 are manufactured integrally with each of the busbar frame 30 and the insulation cover 40, and then only the area corresponding to the second shielding portion A2 is coated with glass fiber (or another material having heat resistance higher than that of glass fiber and electrical conductivity) on the surface.

Additionally, as described above, the secondary battery module provided in the present disclosure is provided with a positive electrode terminal that is connected to the positive electrode leads and becomes a positive electrode terminal through the busbar, and a negative electrode terminal that is connected to the negative electrode leads and becomes a negative electrode terminal through the busbar, respectively.

The second shielding portion A2 provided in this embodiment is also provided at each of the positive electrode terminal and the negative electrode terminal to prevent dust from contacting both the positive electrode terminal and the negative electrode terminal.

The present disclosure having the above configuration may prevent contact between dust and the terminal 33 even if a fire occurs in the battery cell stack 10 and the dust is generated because the space between the battery cell stack 10 and the terminal 33 is closed by the shielding portion A1 and the upper cover portion 45. Accordingly, it is possible to prevent or delay progression to thermal runway.

In the upper cover portion 45, a horizontal portion 43 may be formed to facilitate coupling with the housing frame 20, and the coupling position may be guided by a vertical portion 44.

The shielding portion A1 may be made of glass fiber separately from the busbar frame to prevent damage caused by high-temperature dust.

In addition, the present disclosure further provides a second shielding portion that divides the space between the busbar frame and the insulation cover, so that the possibility of contact between dust and the terminal may be further reduced.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

10: Battery cell stack
11: Battery cell
12: Electrode lead
20: Housing frame
30: Busbar frame
31: Protrusion
33: Terminal
40: Insulation cover
45: Upper cover portion
A1: Shielding portion
A2: Second shielding portion

## Claims

1. A secondary battery module, comprising:
a battery cell stack having a plurality of battery cells stacked and accommodated in a housing frame;
a busbar frame comprising a coupling surface coupled to the housing frame to cover the battery cell stack and a protrusion protruding from the coupling surface outward away from the battery cell stack and having a terminal provided on an upper surface; and
an insulation cover comprising a side cover portion coupled to cover an outer side of the protrusion and an upper cover portion disposed further inward than the side cover portion to expose the terminal at a higher position than the protrusion,
wherein the busbar frame has a shielding portion protruding from the coupling surface in an upward and downward directions to shield a space between the terminal and the battery cell stack.

2. The secondary battery module according to claim 1,
wherein the upper cover portion comprises:
a horizontal portion forming a surface parallel to an upper surface of the protrusion; and
a vertical portion protruding vertically from an upper surface of the horizontal portion.

3. The secondary battery module according to claim 2,
wherein the shielding portion is disposed to be perpendicular to the horizontal portion.

4. The secondary battery module according to claim 2,
wherein the vertical portion is disposed to face an end of the housing frame.

5. The secondary battery module according to claim 1,
wherein a busbar to which electrode leads protruding from each battery cell are electrically connected is coupled to the coupling surface, and
the protrusion is disposed at a higher position than the busbar along the upward and downward directions.

6. The secondary battery module according to any one of claims 1 to 5,
wherein the shielding portion is manufactured separately from the busbar frame, and is made of a material having higher heat resistance than that of the busbar frame and is coupled to the busbar frame.

7. The secondary battery module according to claim 6,
wherein the busbar frame is made of a metal material or a synthetic resin material, and the shielding portion is made of glass fiber.

8. The secondary battery module according to claim 1, further comprising:
second shielding portions that divide and close the space between the insulation cover and the busbar frame at a position spaced apart from the protrusion along a width direction.

9. The secondary battery module according to claim 8,
wherein two of the second shielding portions are formed to be spaced apart from each other with the protrusion interposed therebetween.

10. The secondary battery module according to claim 8 or 9,
wherein the second shielding portion comprises a first projection protruding from the insulation cover and a second projection protruding from the busbar frame, and
the ends of the first projection and the second projection are disposed to face each other to form the second shielding portion.
